# EUROPEAN PATENT SPECIFICATION

(11) **EP 0 778 232 B1**
(45) Date of publication and mention of the grant of the patent: **26.07.2000**
(21) Application number: 96119173.1
(22) Date of filing: 29.11.1996
(51) Int. Cl.: B65G 69/28, B60P 1/43

(54) **Loading ramp for tracked vehicles and the like**
Laderampe für Gleiskettenfahrzeuge oder dergleichen
Rampe de chargement pour un véhicule à chenilles ou similaires

(30) Priority: 04.12.1995 IT MO950052 U
(43) Date of publication of application: 11.06.1997
(73) Proprietor: C.L.M. S.r.l., 41030 Sorbara di Bomporto (Modena) (IT)
(72) Inventor: Baraldi, Walter, 41100 Modena (IT); Baraldi, Gino, 41100 Modena (IT)
(74) Representative: Modiano, Guido, Dr.-Ing.

(56) References cited:
- DE-A- 2 339 432
- DE-A- 3 701 618
- DE-B- 1 238 396
- DE-U- 8 808 785
- US-A- 5 431 525

## Description

The present invention relates to an improved loading ramp for tracked vehicles and the like.

Ramps articulated to the ends of the bed of carrier vehicles are currently used to load and unload tracked or roller-fitted compacting and grading vehicles from said carrier vehicles.

Each one of these conventional ramps consists essentially of a reticulated structure formed by the coupling of an appropriate number of longitudinal members, which form an upper resting surface for said tracks or rollers.

Like the longitudinal members, said surface is metallic and optionally has protruding ridges to facilitate track grip, since the ramps are at a considerable angle during loading and unloading manoeuvres.

However, conventional ramps suffer from a problem in terms of durability and therefore of cost: because of the considerable wear caused by dynamic and often sliding contact between the tracks and the ramps, said ramps wear very quickly and their monolithic nature forces their complete replacement in such a situation.

A principal aim of the present invention is to solve the above-described problem of the prior art by providing an improved loading ramp for tracked vehicles and the like, which allows to reuse, even after prolonged use, substantially the entire load-bearing structure, thus reducing costs for restoring the functionality of said ramp.

This aim and other objects are achieved by a loading ramp according to claim 1.

A loading ramp according to the preamble of claim 1 is shown in DE-A-37 01 618.

Further characteristics and advantages will become apparent from the description of a preferred embodiment of an improved loading ramp for tracked vehicles and the like, illustrated only by way of non-limitative example in the accompanying drawings, wherein:
figure 1 is a general side view of an improved loading ramp for tracked vehicles;
figure 2 is an enlarged-scale partial side view thereof;
figure 3 is a transverse sectional view of the ramp without the plugs;
figure 4 is another partial transverse sectional view of the ramp provided with plugs.

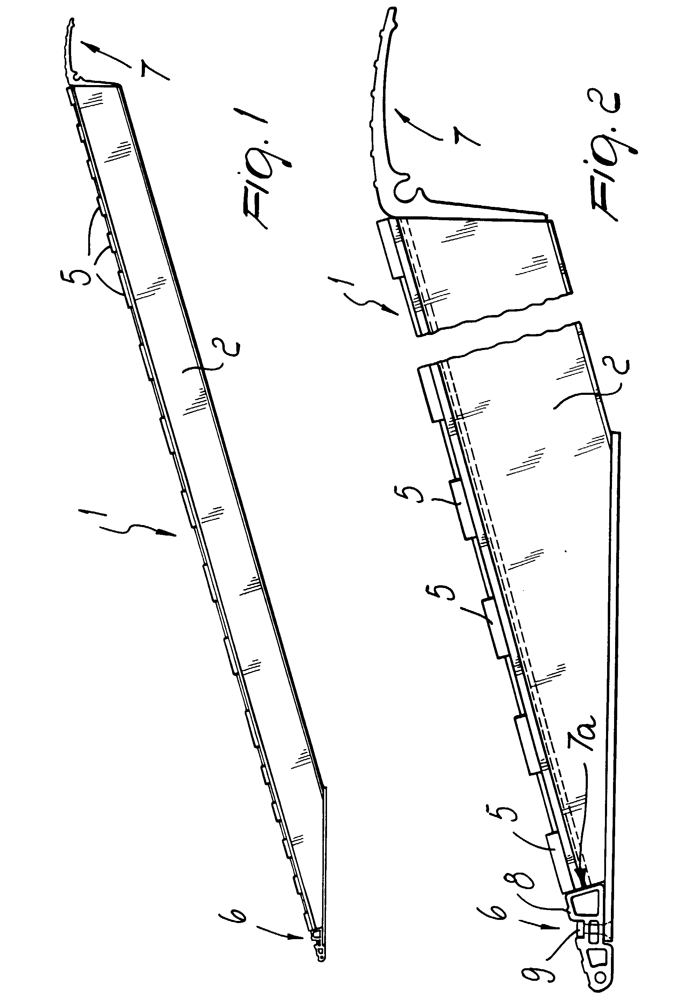

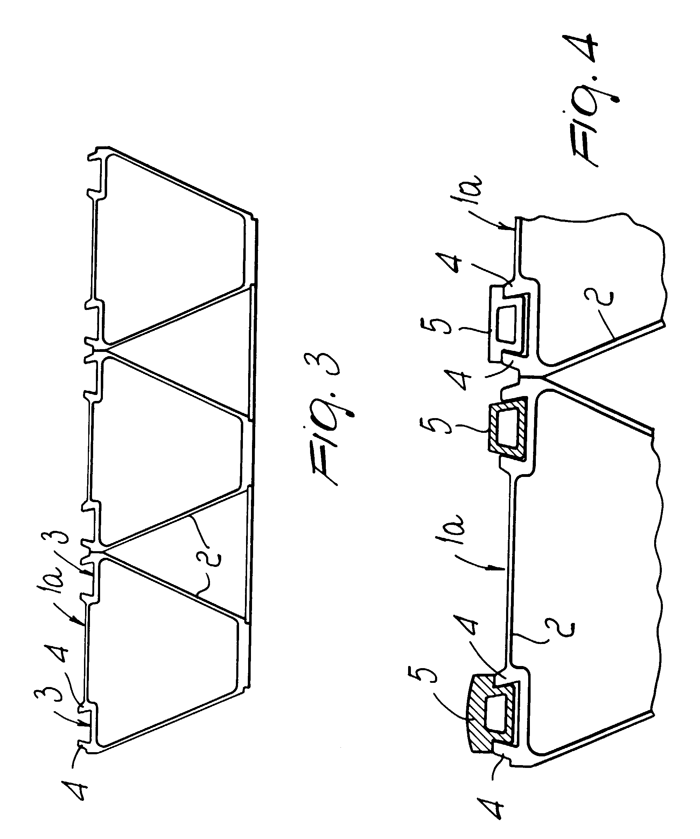

With particular reference to the above figures, the reference numeral 1 generally designates an improved loading ramp for tracked vehicles and the like, not shown in the drawings for the sake of simplicity, which is constituted by a load-bearing frame composed of a plurality of longitudinal members 2 which are associated so as to be parallel to each other in a conventional manner, for example by means of welding beads.

A plurality of grooves 3, two in the preferred embodiment, is formed on the upward-facing surface 1a of each longitudinal member 1, and the edges 4 of said grooves protrude slightly and converge upwards, so as to retain corresponding plugs 5 which can be inserted detachably therein.

The base of the ramp 1, i.e., the portion resting on the ground and arranged opposite to the top portion, which rests on the bed of a vehicle meant to carry the tracked vehicle, is provided with means 6 for closing the end sections of the grooves 3, which act as retainers for said plugs 5.

Said end section is usually provided with conventional elements 7 meant to provide connection to a bed of a vehicle used to carry the tracked vehicle, with no break of continuity.

In its preferred embodiment, the ramp 1 has grooves 3 arranged longitudinally parallel to the axis of each longitudinal member 1 and formed proximate to the lateral edges of each member, so that in the central portion of the total supporting surface the plugs 5 are paired together to provide better support for the track.

Finally, said means 6 for closing the end sections of the grooves 3 are constituted by at least one box-like cross-member 8, which can be anchored to the longitudinal members 1, for example by means of bolts 9, and a face 7a whereof is inclined so as to mate with said end sections of the grooves 3.

Use of the invention can be deduced straightforwardly from the above description: the shaped plugs 5 are inserted in the grooves 3, so as to provide support for the overlying track without said track affecting the entire surface 1a of each longitudinal member 1.

The box-shaped cross-member 9 prevents said plugs 5 from sliding out spontaneously from the bottom by reaction to the force applied thereto by the tracks when the tracked vehicle is climbing or because of the own weight of the tracked vehicle during descent.

Said plugs 5 can be made of various materials and have cross-sections the profile whereof varies as required, so as to offer valid support and safe grip even when loading/unloading of machines equipped with metal grading rollers, such as road-rollers.

When the plugs 5 are worn by use, it is sufficient to remove the cross-member 9, extract the remaining parts of the plugs 5 from the grooves 3 wherein they are inserted, replace them with new ones, and reposition the cross-member 9, reusing the same load-bearing frame constituted by the longitudinal members 1 associated to each other.

It has thus been shown that the described invention achieves the intended aim and objects.

The invention thus conceived is susceptible of modifications and variations, all of which are within the scope of the inventive concept.

All the details may also be replaced with other technically equivalent elements.

In the practical embodiment of the invention, the materials employed, as well as the shapes and the dimensions, may be any according to the requirements without thereby abandoning the scope of the protection of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Loading ramp (1) for tracked vehicles and the like, constituted by a load-bearing frame composed of a plurality of longitudinal members (2) which are associated so as to be parallel to each other, comprising a plurality of grooves (3) formed on the upward-facing surface of each longitudinal member, said grooves (3) having edges so as to retain corresponding plugs (5) which can be detachably inserted therein, the top of said ramp (1) having conventional elements (7) for connection to a bed of a carrier vehicle with no break of continuity, characterised in that said grooves (3) have edges which converge upwards and that the base of said ramp comprises means (8) for closing the end sections of the grooves (3) and for retaining said plugs (5).

2. Loading ramp for tracked vehicles and the like according to claim 1, characterized in that said grooves (3) are arranged longitudinally parallel to the axis of each longitudinal member (2) and are formed proximate to the lateral edges thereof.

3. Loading ramp for tracked vehicles and the like according to claim 1, characterized in that said edges of the grooves (3) protrude slightly upwards.

4. Loading ramp for tracked vehicles and the like according to claim 1, characterized in that said means (8) for closing the end sections of the grooves (3) are constituted by a box-like cross-member which can be anchored to the longitudinal member (2), a face of said cross-member being inclined so as to mate with said end sections of the grooves.

## Patentansprüche

1. Laderampe (1) für Kettenfahrzeuge und dergleichen, welche aus einem Last tragenden Rahmen aus einer Vielzahl von miteinander verbundenen, parallelen Längsgliedern (2) besteht und eine Vielzahl von Rillen (3) umfasst, die auf der aufwärts gerichteten Fläche jedes Längsgliedes gebildet sind, die genannten Rillen (3) Ränder zum Zurückhalten zugehöriger Stecker (5) aufweisen, welche in diese herausnehmbar eingefügt werden können und das obere Ende der genannten Rampe (1) herkömmliche Glieder (7) zur kontinuierlichen Verbindung mit einem Ladenbett eines Transportfahrzeugs aufweist,
**dadurch gekennzeichnet, dass** die genannten Rillen (3) aufwärts zusammen laufende Ränder aufweisen, und dass das untere Ende der genannten Rampe Mittel (8) zum Verschließen der Endabschnitte der Rillen (3) und zum Zurückhalten der genannten Stecker (5) umfasst.

2. Laderampe für Kettenfahrzeuge und dergleichen nach Anspruch 1,
**dadurch gekennzeichnet, dass** die genannten Rillen (3) in Längsrichtung parallel zur Achse jedes Längsgliedes (2) angeordnet sind und nahe deren seitlichen Ränder gebildet sind.

3. Laderampe für Kettenfahrzeuge und dergleichen nach Anspruch 1,
**dadurch gekennzeichnet, dass** die genannten Ränder der Rillen (3) aufwärts leicht vorstehen.

4. Laderampe für Kettenfahrzeuge und dergleichen nach Anspruch 1,
**dadurch gekennzeichnet, dass** die genannten Mittel (8) zum Verschließen der Endabschnitte der Rillen (3) durch ein kastenartiges Querglied gebildet werden, das am Längsglied (2) verankert werden kann, wobei eine Seite des genannten Querglieds geneigt ist, um so zu den genannten Endabschnitten der Rillen zu passen.

## Revendications

1. Rampe de chargement (1) pour véhicules chenillés et analogues, constituée par un châssis porteur de charge composé d'une pluralité d'éléments longitudinaux (2) qui sont associés de façon à être parallèles les uns par rapport aux autres, comprenant une pluralité de rainures (3) formées sur la surface faisant face vers le haut de chaque élément longitudinal, lesdites rainures (3) ayant des bords de façon à retenir des tampons correspondants (5) qui peuvent être insérés de manière amovible en leur sein, le dessus de ladite rampe (1) ayant des éléments classiques (7) pour connexion à un plateau d'un véhicule de transport sans rupture de continuité, caractérisée en ce que lesdites rainures (3) ont des bords qui convergent vers le haut et en ce que la base de ladite rampe comprend des moyens (8) pour fermer les parties d'extrémité des rainures (3) et pour retenir lesdits tampons (5).

2. Rampe de chargement pour véhicules chenillés et analogues, selon la revendication 1, caractérisée en ce que lesdites rainures (3) sont agencées de façon longitudinale, parallèlement à l'axe de chaque élément longitudinal (2) et sont formées à proximité des bords latéraux de ce dernier.

3. Rampe de chargement pour véhicules chenillés et analogues, selon la revendication 1, caractérisée en ce que lesdits bords des rainures (3) dépassent légèrement vers le haut.

4. Rampe de chargement pour véhicules chenillés et analogues, selon la revendication 1, caractérisée en ce que lesdits moyens (8) pour fermer les parties d'extrémité des rainures (3) sont constitués par un élément transversal semblable à une boîte qui peut être ancré à l'élément longitudinal (2), une face dudit élément transversal étant inclinée de façon à s'accoupler avec lesdites parties d'extrémité des rainures.
